# EUROPEAN PATENT SPECIFICATION

(11) **EP 3 505 570 B1**
(45) Date of publication and mention of the grant of the patent: **21.02.2024**
(21) Application number: 17843426.2
(22) Date of filing: 10.08.2017
(51) Int. Cl.: C08L 83/07, B60R 21/235, C08K 3/36, C08K 5/5455, C08K 5/56, C08L 83/05, C08G 77/12, C08G 77/20, C08L 83/04, C09D 183/04, D06M 15/643, D06N 3/12

(54) **ADDITION-CURABLE SILICONE RUBBER COMPOSITION AND AIRBAG**
ADDITIONSHÄRTBARE SILIKONKAUTSCHUKZUSAMMENSETZUNG UND AIRBAG
COMPOSITION DE CAOUTCHOUC DE SILICONE DURCISSABLE PAR ADDITION ET PRODUIT DURCI

(30) Priority: 26.08.2016 JP 2016165594
(43) Date of publication of application: 03.07.2019
(73) Proprietor: Shin-Etsu Chemical Co., Ltd., Tokyo 100-0004 (JP)
(72) Inventor: MIZUSHIMA, Hidenori, Annaka-shi Gunma 379-0224 (JP); UBUKATA, Shigeru, Annaka-shi Gunma 379-0224 (JP); ASHIDA, Ryo, Annaka-shi Gunma 379-0224 (JP)
(74) Representative: Ter Meer Steinmeister & Partner
(86) International application number: PCT/JP2017/029144
(87) International publication number: WO 2018/037942

(56) References cited:
- EP-A1- 1 688 463
- WO-A1-2011/082136
- JP-A- 2006 022 284
- JP-A- 2013 112 722
- JP-A- 2013 159 670
- JP-A- 2014 136 722
- JP-A- 2014 136 722
- JP-A- 2015 052 027

## Description

### TECHNICAL FIELD

This invention relates to airbags such as curtain airbags having a silicone rubber coating layer formed on textile fabric such as nylon 66 and a liquid addition-curable silicone rubber composition useful for the preparation of airbags.

### BACKGROUND ART

In the prior art, silicone rubber compositions for airbags are proposed for the purpose of forming a rubber coating on textile surface. For example, there are known an airbag-forming addition curable liquid silicone rubber composition comprising an inorganic filler, siloxane resin, and epoxy-containing silicon compound added, the composition having improved adhesion to base fabric (Patent Document 1); an addition curable liquid silicone rubber coating composition comprising an inorganic filler, siloxane resin, organotitanium compound and alkyl silicate added, the composition developing improved adhesion to base fabric by low-temperature brief heating (Patent Document 2); an airbag-forming silicone rubber composition comprising a vinyl-containing organopolysiloxane having a limited viscosity and having thin coating ability (Patent Document 3); and a rubber coating composition having added thereto wet silica having an average specific surface area of 150 to 250 m²/g as measured by the BET method and an average particle size of up to 20 µm, the composition being suitable for forming rubber coated textile with minimized tack (Patent Document 4).

Patent document EP 1 688 463 A describes an addition-curable silicone rubber composition used for coating a base fabric for the manufacture of a curtain air bag. The liquid silicone coating composition comprises 100 parts by mass of an organopolysiloxane comprising a blend of an organopolysiloxane end-capped by a vinyldimethylsilyl group (M^{Vi}) and having a viscosity of 30,000 mPa.s, an organopolysiloxane end-capped by a vinyldimethylsilyl group (M^{Vi}) and having a viscosity of 5,000 mPa.s and a branched organopolysiloxane having M, M^{Vi} and Q units and an organohydrogensiloxane comprising a blend of an organopolysiloxane end-capped by dimethylhydrogensilyl groups (M^{H}), an organopolysiloxane comprising SiH along the chain (D^{H} units) and a organohydrogensiloxane having mainly a linear structure and of general formula D₄^{H}-CH₂-CH₂-D₂₀₁-CH₂-CH₂-D^{H}₄ . The molar ration SiH/vinyl is 1.6 to 2.2. The composition may further comprise 40 parts by weight of silica having a BET of 300 m²/g, an adhesion imparting agent (gycidyl-containing alkoxysilane), an addition reaction catalyst (platinium-based) and an organotitanate catalyst.

Patent document JP 2014 136722 describes a liquid silicone rubber composition used for coating fabric for the manufacture of air bag. The composition ocomprises an alkenyl group-containing organopolysiloxane having at least two alkenyl groups per molecule, a three-dimensional network organopolysiloxane resin having M, M^{Vi} and Q units, silica fine powder, a silica surface treatment agent, water, organohydrogen polysiloxane, an addition reaction catalyst and an adhesion-promoting silicon-based compound. The organohydrogenpolysiloxane is a linear polysiloxane comprising Si-H along the chain (D^{H} units).

Patent document WO 2011/082136 relates to a silicone rubber composition used for coating a fabric for the manufacture of air bags and able to provide reduced gas permeability and good air tightness to the woven air bags. The silicone composition comprises an organopolysiloxane having having at least two alkenyl groups per molecule, an organosilicon crosslinker having at least three silicon-bonded hydrogen atoms, a catalyst able to promote the addition reaction (platinium-based compound) and a reinforcing filler such as silica. The composition in particular comprises an organohydrogenpolysiloxane having a linear structure and comprising Si-H along the chain (D^{H} units). Finally, patent document JP 2013 112722 describes a silicone rubber composition used as adhesive for sealing/sewing air bag fabric already coated with a silicone composition. The composition comprises 70 parts by mass of an organopolysiloxane comprising a blend of an organopolysiloxane end-capped by a vinyldimethylsilyl group (M^{Vi}) and having a viscosity of 100,000 mPa.s and an organopolysiloxane end-capped by a vinyldimethylsilyl group (M^{Vi}) and having a viscosity of 10,000 mPa.s, an organohydrogensiloxane comprising a blend of an organopolysiloxane end-capped by dimethylhydrogensilyl groups (M^{H}) and comprising SiH along the chain (D^{H} units) and a cyclic organohydrogensiloxane of general formula D^{(CH3H7)}D₃^{H}. The composition may further comprise silica having a BET of 200 m²/g and an addition reaction catalyst.

Unlike the airbags mounted at driver and front seats, curtain airbags are mounted from the front pillar along the roof side and required to maintain inflation for a certain period of time for protecting the head or preventing ejection in collision or rollover incidents. When used in the preparation of curtain airbags, the aforementioned compositions are unsatisfactory in preventing leakage of inflator gas and sustaining inflation for a certain time.

### PRIOR ART DOCUMENTS

### PATENT DOCUMENTS

Patent Document 1: JP-A H05-214295
Patent Document 2: JP-A 2002-138249
Patent Document 3: JP-A 2001-287610
Patent Document 4: JP-A 2001-059052

### SUMMARY OF INVENTION

### TECHNICAL PROBLEM

An object of the invention, which has been made under the above-mentioned circumstances, is to provide an airbag, typically curtain airbag capable of preventing leakage of inflator gas and sustaining inflation for some time, and a liquid addition-curable silicone rubber composition useful in preparing the same.

### SOLUTION TO PROBLEM

Making extensive investigations to attain the above object, the inventors have reached the invention.

The invention provides an addition-curable silicone rubber composition and an airbag as defined below.
[1] An addition-curable silicone rubber composition comprising:
   (A) 100 parts by weight of an organopolysiloxane having at least two C₂-C₈ alkenyl groups per molecule,
   (B) a cyclic organohydrogenpolysiloxane having the formula (1): 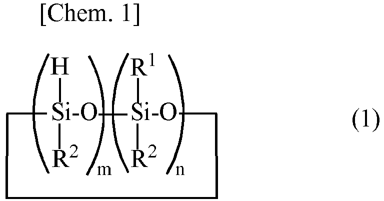 wherein R¹ is a C₁-C₁₂ alkyl group, R² is a C₁-C₁₂ alkyl group or C₆-C₁₂ aryl group, m is an integer of 1 to 3, n is an integer of 1 to 3, m+n is 4 or 5, the organohydrogenpolysiloxane of formula (1) wherein m=2 being present in an amount of at least 50 mol% based on the total amount of component (B),
   (C) an organohydrogenpolysiloxane having at least two silicon-bonded hydrogen atoms per molecule, represented by the average compositional formula (2):
      [Chem. 2]

      R²ₑH_{f}SiO_{(4-e-f)/2} (2)

      wherein R² is as defined above, e is a number of 0.7 to 2.1, f is a number of 0.001 to 1.0, e+f is a number of 0.8 to 2.7,
      the amounts of components (B) and (C) blended being such that the total number of silicon-bonded hydrogen atoms in components (B) and (C) is 1 to 7 per silicon-bonded alkenyl group in component (A), and the number of silicon-bonded hydrogen atoms in component (B) is 1 to 30% based on the total number of silicon-bonded hydrogen atoms in components (B) and (C),
   (D) 0.1 to 50 parts by weight of finely divided silica having a specific surface area of at least 50 m²/g as measured by the BET method,
   (E) a catalytic amount of an addition reaction catalyst,
   (F) a tackifier, and
   (G) at least one condensation catalyst selected from organotitanium compounds and organozirconium compounds.
[3] The addition-curable silicone rubber composition of [2] wherein component (F) contains an alkoxysilyl-modified isocyanurate compound having the formula (3): 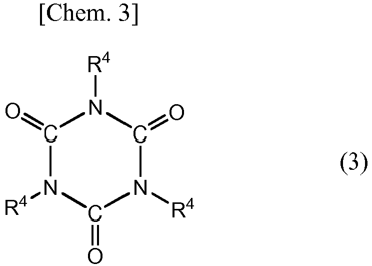 wherein R⁴ is an allyl group or a group having the formula (4): 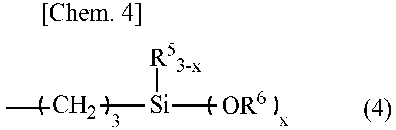 wherein R⁵ is a C₁-C₆ monovalent hydrocarbon group, R⁶ is a C₁-C₄ alkyl group, x is 2 or 3, at least two of R⁴ being groups of formula (4).
[4] The addition-curable silicone rubber composition of any one of [1] to [3] wherein component (A) contains (A-1) an alkenyl-containing organopolysiloxane containing at least two C₂-C₈ alkenyl groups per molecule and having a viscosity of at least 70,000 mPa·s at 25°C as measured by the method of JIS Z8803:2011.
[5] The addition-curable silicone rubber composition of [4] wherein component (A) further contains (A-2) an alkenyl-containing organopolysiloxane containing at least two C₂-C₈ alkenyl groups per molecule and having a viscosity of 10,000 to 50,000 mPa·s at 25°C as measured by the method of JIS Z8803:2011.
[6] The addition-curable silicone rubber composition of any one of [1] to [5] wherein component (B) is a cyclic organohydrogenpolysiloxane of formula (1) wherein m=n=2.
[7] The addition-curable silicone rubber composition of any one of [1] to [6] wherein component (C) contains (C-1) an organohydrogenpolysiloxane having at least one silicon-bonded hydrogen atom (SiH group) at each of molecular chain end and side chain.
[8] The addition-curable silicone rubber composition of [7] wherein component (C) further contains at least one of
   (C-2) an organohydrogenpolysiloxane having a silicon-bonded hydrogen atom (SiH group) only at a side chain of the molecular chain and
   (C-3) an organohydrogenpolysiloxane having a silicon-bonded hydrogen atom (SiH group) only at an end of the molecular chain.
[9] An airbag comprising a base fabric and a cured film of the addition-curable silicone rubber composition of any one of [1] to [8] thereon.
[10] The airbag of [9] having a hollow weave structure.
[11] The airbag of [9] or [10] for use as a curtain airbag.

### ADVANTAGEOUS EFFECTS OF INVENTION

The airbag, typically curtain airbag, to which the liquid addition-curable silicone rubber composition of the invention is applied, is capable of preventing leakage of inflator gas and sustaining inflation for a sufficient time. The liquid addition-curable silicone rubber composition cures into a cured product which is satisfactory in physical properties including hardness, tensile strength, and elongation at break, as well as adhesion to airbag base fabric.

### DESCRIPTION OF EMBODIMENTS

### <Addition-curable silicone rubber composition>

The invention provides an addition-curable silicone rubber composition comprising components (A) to (E) defined below, which is liquid at room temperature (25°C). These components are described below in detail. As used herein, the term "viscosity" refers to a viscosity measured at 25°C by the method of JIS Z8803:2011, and represents a value measured by a rotational viscometer.

### (A) Alkenyl-containing organopolysiloxane

Component (A), which is the base of the inventive composition, is an organopolysiloxane having on the average at least 2 silicon-bonded alkenyl groups per molecule, preferably on the average at most 20, more preferably on the average at most 10 silicon-bonded alkenyl groups per molecule.

The silicon-bonded alkenyl groups are typically of 2 to 8 carbon atoms, preferably 2 to 4 carbon atoms. Examples include vinyl, allyl, propenyl, butenyl, pentenyl, hexenyl, cyclohexenyl, and heptenyl, with vinyl being preferred. The bonding position of silicon-bonded alkenyl group in the organopolysiloxane as component (A) may be a molecular chain end or molecular chain non-end (i.e., molecular chain side chain other than the molecular chain end), or both.

Silicon-bonded organic groups other than the silicon-bonded alkenyl groups include aliphatic unsaturation-free, substituted or unsubstituted monovalent hydrocarbon groups of typically 1 to 12 carbon atoms, preferably 1 to 10 carbon atoms. Examples thereof include alkyl groups such as methyl, ethyl, propyl, isopropyl, isobutyl, tert-butyl, butyl, pentyl, hexyl and heptyl; cycloalkyl groups such as cyclopentyl and cyclohexyl; aryl groups such as phenyl, tolyl, xylyl and naphthyl; aralkyl groups such as benzyl and phenethyl; and halogenated alkyl groups in which hydrogen atom in their functionality is substituted by a halogen atom such as chlorine or fluorine, such as chloromethyl, 3-chloropropyl, and 3,3,3-trifluoropropyl. Preferred are methyl and phenyl.

The content of silicon-bonded alkenyl groups in component (A) is typically 0.001 to 10 mol%, preferably 0.01 to 5 mol% based on the overall silicon-bonded organic groups.

The molecular structure of the organopolysiloxane as component (A) is not particularly limited and may be straight, branched or cyclic. Preferred is a straight diorganopolysiloxane having a backbone consisting essentially of repeating R₂SiO_{2/2} units wherein R is a monovalent hydrocarbon group (i.e., diorganosiloxane units) and capped at both ends of the molecular chain with R₃SiO_{1/2} units wherein R is as defined above (i.e., triorganosiloxy units). As used herein, the term "backbone consisting essentially of R₂SiO_{2/2} units" means that R₂SiO_{2/2} units account for typically 99 to 100 mol%, preferably 99.5 to 100 mol% of the siloxane units constituting the backbone exclusive of both ends of the molecular chain.

In the above formula, R is a monovalent hydrocarbon group which has typically 1 to 12 carbon atoms, preferably 1 to 10 carbon atoms. Examples include those exemplified above for the silicon-bonded alkenyl group, and those exemplified above for the silicon-bonded organic group other than the silicon-bonded alkenyl group.

The organopolysiloxane as component (A) has a viscosity of preferably 100 to 500,000 mPa·s, more preferably 10,000 to 200,000 mPa-s, because the resulting composition is easy to handle and the cured product thereof has satisfactory physical properties including hardness, elongation at break and tensile strength.

Preferably the organopolysiloxane as component (A) has the average compositional formula (5).
[Chem. 5]

R²ₐR³_{b}SiO_{(4-a-b)/2} (5)

Herein R² is independently a C₁-C₁₂ alkyl group or C₆-C₁₂ aryl group, R³ is independently a C₂-C₈ alkenyl group, a is a number of 1.8 to 2.2, preferably 1.9 to 2.0, b is a number of 0.0001 to 0.2, preferably 0.001 to 0.1, and a+b is a number of 1.85 to 2.3, preferably 1.95 to 2.05.

In average compositional formula (5), R² is selected from alkyl groups of 1 to 12 carbon atoms, preferably 1 to 10 carbon atoms and aryl groups of 6 to 12 carbon atoms, preferably 6 to 10 carbon atoms. Examples include those exemplified above for the silicon-bonded organic group other than the silicon-bonded alkenyl group.

In average compositional formula (5), R³ is an alkenyl group, which has typically 2 to 8 carbon atoms, preferably 2 to 4 carbon atoms. Examples include those exemplified above for the silicon-bonded alkenyl group.

Examples of the organopolysiloxane as component (A) include molecular chain both end trimethylsiloxy-capped dimethylsiloxane/methylvinylsiloxane copolymers,
molecular chain both end trimethylsiloxy-capped methylvinylpolysiloxane,
molecular chain both end trimethoxysiloxy-capped
dimethylsiloxane/methylvinylsiloxane/methylphenylsiloxane copolymers,
molecular chain both end dimethylvinylsiloxy-capped dimethylpolysiloxane,
molecular chain both end dimethylvinylsiloxy-capped methylvinylpolysiloxane,
molecular chain both end dimethylvinylsiloxy-capped dimethylsiloxane/methylvinylsiloxane copolymers,
molecular chain both end dimethylvinylsiloxy-capped
dimethylsiloxane/methylvinylsiloxane/methylphenylsiloxane copolymers,
molecular chain both end divinylmethylsiloxy-capped dimethylpolysiloxane,
molecular chain both end divinylmethylsiloxy-capped dimethylsiloxane/methylvinylsiloxane copolymers,
molecular chain both end trivinylsiloxy-capped dimethylpolysiloxane,
molecular chain both end trivinylsiloxy-capped dimethylsiloxane/methylvinylsiloxane copolymers,
organosiloxane copolymers consisting of siloxane units of the formula: R²₃SiO_{0.5} (wherein R² is as defined above), siloxane units of the formula: R²₂R³SiO_{0.5} (wherein R³ is as defined above), siloxane units of the formula: R²₂SiO, and siloxane units of the formula: SiO₂,
organosiloxane copolymers consisting of siloxane units of the formula: R²₃SiO_{0.5}, siloxane units of the formula: R²₂R³SiO_{0.5}, and siloxane units of the formula: SiO₂,
organosiloxane copolymers consisting of siloxane units of the formula: R²₂R³SiO_{0.5}, siloxane units of the formula: R²₂SiO, and siloxane units of the formula: SiO₂, and
organosiloxane copolymers consisting of siloxane units of the formula: R²R³SiO and siloxane units of the formula: R²SiO_{1.5} or siloxane units of the formula: R³SiO_{1.5}.

The organopolysiloxane as component (A) may be used alone or in admixture.

On use of a mixture of two or more organopolysiloxanes, component (A) preferably contains (A-1) an alkenyl-containing organopolysiloxane containing at least two C₂-C₈ alkenyl groups per molecule and having a viscosity at 25°C of at least 70,000 mPa·s, especially 80,000 to 120,000 mPa-s as measured by the method of JIS Z8803:2011 and more preferably in combination with (A-2) an alkenyl-containing organopolysiloxane containing at least two C₂-C₈ alkenyl groups per molecule and having a viscosity at 25°C of 10,000 to 50,000 mPa·s, especially 20,000 to 40,000 mPa·s as measured by the method of JIS Z8803:2011. A blend ratio of (A-1) to (A-2) preferably ranges from 1/9 to 9/1 in weight ratio. A mixture in the range is satisfactory in preventing leakage of inflator gas and sustaining inflation for a certain time. The resulting liquid addition-curable silicone rubber composition cures into a cured product which is satisfactory in physical properties including hardness, tensile strength, and elongation at break, as well as adhesion to airbag base fabric. Thus the liquid addition-curable silicone rubber composition is fully compatible with airbag fabric.

### (B) Cyclic organohydrogenpolysiloxane

Component (B) is a cyclic organohydrogenpolysiloxane. It is a component that functions to extend the molecular chain length of component (A) upon curing of the resulting composition and contributes to an improvement in the sustainment of airbag inflation time. Since interaction under the impetus of intermolecular forces occurs between alkyl or aryl groups in its molecule and polymer molecules in the airbag base fabric such as nylon 66, nylon 6, polyester fibers, aramid fibers, polyamide fibers or polyester fibers, it is also a component that improves the adhesion of the composition to the base fabric.

The cyclic organohydrogenpolysiloxane has a molecular structure of the formula (1). 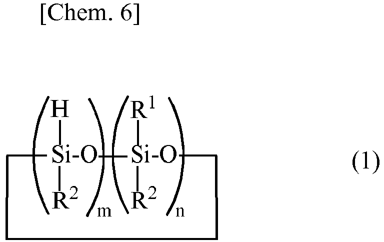 Herein R¹ is a C₁-C₁₂ alkyl group, R² is a C₁-C₁₂ alkyl group or C₆-C₁₂ aryl group, m is an integer of 1 to 3, n is an integer of 1 to 3, m+n is 4 or 5. The organohydrogenpolysiloxane of formula (1) wherein m=2 is present in an amount of at least 50 mol% based on the total amount of component (B).

In formula (1), R¹ is an alkyl group of 1 to 12 carbon atoms, preferably 1 to 8 carbon atoms. Examples include methyl, ethyl, propyl, isopropyl, isobutyl, tert-butyl, butyl, pentyl, hexyl and heptyl, with methyl and isopropyl being preferred.

In formula (1), R² is selected from alkyl groups of 1 to 12 carbon atoms, preferably 1 to 8 carbon atoms and aryl groups of 6 to 12 carbon atoms, preferably 6 to 8 carbon atoms. Examples include those exemplified above for the silicon-bonded organic group other than the silicon-bonded alkenyl group in component (A).

The cyclic organohydrogenpolysiloxane as component (B) is blended in an amount as described later in conjunction with component (C). The cyclic organohydrogenpolysiloxane as component (B) may be used alone or in admixture.

### (C) Organohydrogenpolysiloxane

Component (C) is an organohydrogenpolysiloxane having at least two silicon-bonded hydrogen atoms per molecule, represented by the average compositional formula (2):
[Chem. 7]

R²ₑH_{f}SiO_{(4-e-f)/2} (2)

wherein R² is selected from a C₁-C₁₂ alkyl group and C₆-C₁₂ aryl group, e is a number of 0.7 to 2.1, f is a number of 0.001 to 1.0, and e+f is a number of 0.8 to 2.7, preferably e is a number of 1.0 to 2.0, f is a number of 0.01 to 1.0, and e+f is a number of 1.1 to 2.5.

The organohydrogenpolysiloxane as component (C) has preferably 2 to 200, more preferably 2 to 100 silicon-bonded hydrogen atoms (i.e., SiH groups) per molecule, and 20 to 100%, preferably 30 to 100% (on number basis) of the SiH groups are present in organohydrogensiloxane units of the formula: R²HSiO_{2/2}. It has a viscosity at 25°C of 1 to 10,000 mPa·s, preferably 10 to 5,000 mPa·s. Notably the organohydrogenpolysiloxane is free of aliphatic unsaturation in the molecule.

The molecular structure of the organohydrogenpolysiloxane as component (C) is not particularly limited, and may be, for example, linear, branched, or three-dimensional network (exclusive of wholly cyclic one), preferably substantially linear. A cyclic siloxane may be bonded to the molecular chain end. As used herein, the term "substantially linear" structure means that R⁶₂SiO_{2/2} units (wherein R⁶ is independently hydrogen or R²) account for typically 99 to 100 mol%, preferably 99.5 to 100 mol% of the siloxane units constituting the backbone exclusive of molecular chain both ends (in case of a cyclic siloxane being bonded thereto, the cyclic siloxane).

In the molecule of organohydrogenpolysiloxane (C), the silicon-bonded hydrogen atom may be positioned at a molecular chain end or a molecular chain non-end or both. When a cyclic siloxane is bonded to the molecular chain end, the silicon-bonded hydrogen atom may be positioned in the cyclic siloxane.

Examples of the organohydrogenpolysiloxane as component (C) include those containing R²HSiO_{2/2} units (wherein R² is as defined above), and optionally R²₂R⁶SiO_{1/2} units (wherein R⁶ is as defined above) and/or R²₂SiO_{2/2} units in the molecule.

Illustrative examples of the organohydrogenpolysiloxane as component (C) include 1,3,5,7-tetramethylcyclotetrasiloxane,
methylhydrogencyclopolysiloxane,
methylhydrogensiloxane/dimethylsiloxane cyclic copolymers,
both end trimethylsiloxy-capped methylhydrogenpolysiloxane,
both end trimethylsiloxy-capped dimethylsiloxane/methylhydrogensiloxane copolymers,
both end dimethylhydrogensiloxy-capped dimethylsiloxane/methylhydrogensiloxane copolymers,
both end trimethylsiloxy-capped methylhydrogensiloxane/diphenylsiloxane copolymers,
both end trimethylsiloxy-capped
methylhydrogensiloxane/diphenylsiloxane/dimethylsiloxane copolymers,
both end trimethylsiloxy-capped
methylhydrogensiloxane/methylphenylsiloxane/dimethylsiloxane copolymers,
both end dimethylhydrogensiloxy-capped
methylhydrogensiloxane/dimethylsiloxane/diphenylsiloxane copolymers,
both end dimethylhydrogensiloxy-capped
methylhydrogensiloxane/dimethylsiloxane/methylphenylsiloxane copolymers, copolymers consisting of (CH₃)(H)SiO_{2/2} units, (CH₃)₃SiO_{1/2} units and SiO_{4/2} units, copolymers consisting of (CH₃)(H)SiO_{2/2} units, (CH₃)₂SiO_{2/2} units, (CH₃)₃SiO_{1/2} units and SiO_{4/2} units, copolymers consisting of (CH₃)(H)SiO_{2/2} units, (CH₃)₂(H)SiO_{1/2} units, (CH₃)₃SiO_{1/2} units and SiO_{4/2} units, and copolymers consisting of (CH₃)(H)SiO_{2/2} units, (CH₃)₂(H)SiO_{1/2} units, (CH₃)₂SiO_{2/2} units, (CH₃)₃SiO_{1/2} units and SiO_{4/2} units. More preferred examples are given below. 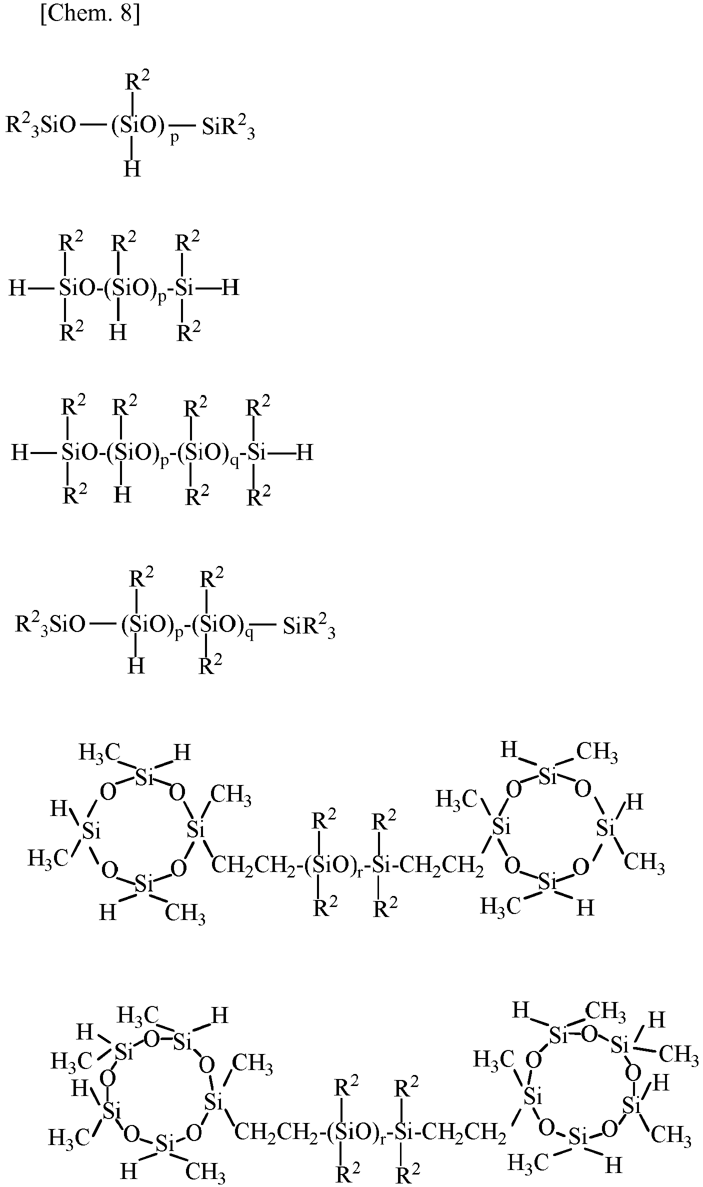
Herein R² is as defined above, p, q and r are independently an integer of at least 1, with the proviso that p, q and r are such integers that the organohydrogenpolysiloxane may have a viscosity at 25°C of 0.001 to 10 Pa·s, preferably 0.01 to 5 Pa·s.

Amounts of components (B) and (C) blended are such that the total number of silicon atom-bonded hydrogen atoms in components (B) and (C) is 1 to 7 (i.e., a molar ratio of 1/1 to 7/1), preferably 1 to 5, more preferably 1 to 3 per silicon atom-bonded alkenyl group in component (A), and the number (or moles) of silicon atom-bonded hydrogen atoms in component (B) is 1 to 30%, preferably 2 to 20% of the number (or moles) of silicon atom-bonded hydrogen atoms in components (B) and (C). If these numbers (or amounts) are outside the ranges, the air tightness of an airbag during inflation is inferior.

The organohydrogenpolysiloxane as component (C) may be used alone or in admixture.

On use of a mixture of two or more organohydrogenpolysiloxanes, one is preferably (C-1) an organohydrogenpolysiloxane having at least one silicon-bonded hydrogen atom (SiH group) at each of molecular end and side chain. More preferably, component (C) further contains at least one of (C-2) an organohydrogenpolysiloxane having a silicon-bonded hydrogen atom (SiH group) only at a side chain of the molecular chain and (C-3) an organohydrogenpolysiloxane having a silicon-bonded hydrogen atom (SiH group) only at an end of the molecular chain. On use of (C-1) and (C-2) or (C-3), their blend ratio is preferably from 9.99:0.01 to 0.01:9.99 in weight ratio. On use of (C-1), (C-2) and (C-3), their blend ratio is preferably from 9.98:0.01 :0.01 to 0.01 :5.00:4.99 in weight ratio. These ranges ensure that the composition is effective for preventing leakage of inflator gas and sustaining inflation for a sufficient time. The liquid addition-curable silicone rubber composition cures into a cured product which is satisfactory in physical properties including hardness, tensile strength, and elongation at break, as well as adhesion to airbag base fabric. It is thus useful as a liquid silicone rubber coating composition applicable to airbag base fabric.

### (D) Finely divided silica

Component (D) is finely divided silica which serves as a reinforcement, that is, to impart a high tear strength to the cured composition. Use of finely divided silica enables to form a coating layer having improved tear strength. The finely divided silica should have a specific surface area of at least 50 m²/g, preferably 50 to 400 m²/g, and more preferably 100 to 300 m²/g, as measured by the BET method. Silica with a specific surface area of less than 50 m²/g may sometimes fail to impart satisfactory tear strength to the composition.

The finely divided silica as component (D) may be any known silica used as a reinforcing filler for conventional silicone rubber, provided that the silica has a BET specific surface area within the above-indicated range. Exemplary silicas include precipitated silica, fumed silica and fired silica. Although finely divided silica may be used directly without modification, it is advantageous to treat silica with organosilicon compounds to render surfaces hydrophobic because the use of hydrophobic finely divided silica can impart a good flow to the composition. Exemplary organosilicon compounds include hexaorganodisilazanes such as hexamethyldisilazane, divinyltetramethyldisilazane, and dimethyltetravinyldisilazane; alkoxysilanes such as methyltrimethoxysilane, ethyltrimethoxysilane, propyltrimethoxysilane, butyltrimethoxysilane, dimethyldimethoxysilane, diethyldimethoxysilane, vinyltriethoxysilane, vinyltrimethoxysilane, trimethylmethoxysilane, triethylmethoxysilane, vinyltris(methoxyethoxy)silane, and divinyldimethoxysilane; methylchlorosilanes such as trimethylchlorosilane, dimethyldichlorosilane, and methyltrichlorosilane; and dimethylpolysiloxane free of silicon-bonded alkenyl groups and silicon-bonded hydrogen atoms.

The amount of component (D) compounded is 0.1 to 50 parts by weight, preferably 1 to 50 parts by weight, and more preferably 5 to 40 parts by weight per 100 parts by weight of the organopolysiloxane (A). Too less amounts may fail to provide the desired tear strength whereas too much amounts may compromise the flow of the composition, making the coating operation difficult.

The finely divided silica as component (D) may be used alone or in admixture.

### (E) Addition reaction catalyst

Component (E) is an addition reaction catalyst, which promotes the addition reaction between silicon-bonded alkenyl groups in component (A) and SiH groups in components (B) and (C). Although the addition reaction catalyst is not particularly limited, suitable catalysts include, for example, platinum group metals such as platinum, palladium, and rhodium; chloroplatinic acid; alcohol-modified chloroplatinic acid; coordination compounds of chloroplatinic acid with olefins, vinylsiloxane or acetylene compounds; platinum group metal compounds such as tetrakis(triphenylphosphine)palladium and chlorotris(triphenylphosphine)rhodium. The platinum group metal compounds are preferred.

Component (E) may be compounded in a catalytic amount, preferably in an amount of 1 to 500 ppm, and more preferably 10 to 100 ppm, expressed as the weight of catalyst metal element based on the total weight of components (A) to (C). If the amount is too less, the addition reaction may become very slow, or the composition may not cure. If the amount is too much, the cured composition may have poor heat resistance.

The addition reaction catalyst as component (E) may be used alone or in admixture.

While the addition curable silicone rubber composition contains components (A) to (E) as essential components, the following components may be further added.

### (F) Tackifier

Component (F) is a tackifier, which is effective for improving the adhesion of the composition to synthetic fiber woven fabric bases, non-woven fabric bases, thermoplastic resin sheets or film bases for airbags. The tackifier is not particularly limited as long as it can improve the self-adhesion of the composition. Exemplary tackifiers include organosilicon compound-based tackifiers and non-silicon organic compound-based tackifiers. Specifically, suitable organosilicon compound-based tackifiers include tackifiers composed of organosilicon compounds such as organosilanes and organopolysiloxanes other than components (A) to (C), and suitable non-silicon organic compound-based tackifiers include tackifiers composed of organic acid allyl esters and epoxy ring-opening catalysts. These catalysts may be used alone or in admixture.

The organic acid allyl esters are esters containing no silicon atom in the molecule, for example, organic acid allyl esters having one allyl group and at least one ester group in the molecule. Exemplary organic acids include unsaturated carboxylic acids such as acrylic acid, methacrylic acid, and vinylacetic acid; aromatic carboxylic acids such as benzoic acid, phthalic acid, pyromellitic acid; and saturated fatty acids such as acetic acid, propionic acid, butyric acid and lauric acid. Suitable allyl esters of these organic acids include, for example, allyl esters of unsaturated carboxylic acids such as acrylic acid, methacrylic acid, and vinylacetic acid; allyl esters of aromatic carboxylic acids such as allyl benzoate, diallyl phthalate, tetraallyl pyromellitate; and allyl esters of saturated fatty acids such as allyl acetate, allyl propionate, allyl butyrate, allyl valerate, and allyl laurate.

The epoxy ring-opening catalysts are catalysts containing no silicon atom in the molecule, for example, epoxy ring-opening catalysts of organic metal chelate, amine, amide, imidazole, and acid anhydride types.

Suitable organosilicon compounds include organosilanes having at least one functional group, preferably at least two functional groups selected from silicon-bonded alkenyl groups such as vinyl and allyl, an epoxy group bonded to a silicon atom via a carbon atom in an alkylene group optionally containing at least one ether bonding oxygen atom such as γ-glycidoxypropyl and β-(3,4-epoxycyclohexyl)ethyl; acryloxy and methacryloxy groups bonded to a silicon atom via a carbon atom in an alkylene group such as γ-acryloxypropyl and γ-methacryloxypropyl; alkoxy groups such as methoxy, ethoxy, propoxy, and butoxy; alkoxysilyl groups bonded to a silicon atom via an alkylene group and optionally containing one or two ester structures, urethane structures, or ether structures such as trimethoxysilyl, triethoxysilyl and methyldimethoxysilyl; isocyanate groups; and SiH groups; linear or cyclic siloxane oligomers of 3 to 100, preferably 3 to 50, more preferably 5 to 20 silicon atoms, other than components (A) to (C); (alkoxy)silyl-modified compounds of triallyl isocyanurate and siloxane derivatives thereof, with the compounds having at least two functional groups per molecule being preferred.

Preferably, the composition contains as component (F) an alkoxysilyl-modified isocyanurate compound having the formula (3): 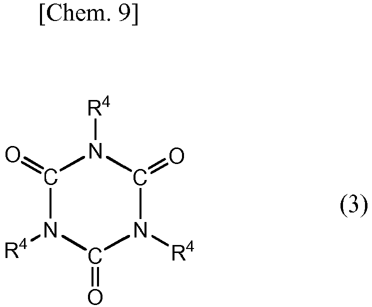 wherein R⁴ is an allyl group or a group having the formula (4): 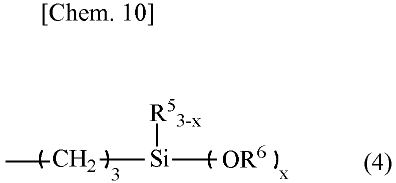 wherein R⁵ is a C₁-C₆ monovalent hydrocarbon group, R⁶ is a C₁-C₄ alkyl group, and x is 2 or 3, at least two of groups R⁴ being groups of formula (4).

Examples of the organosilicon compound are given below. 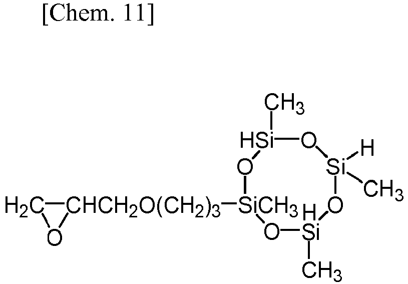 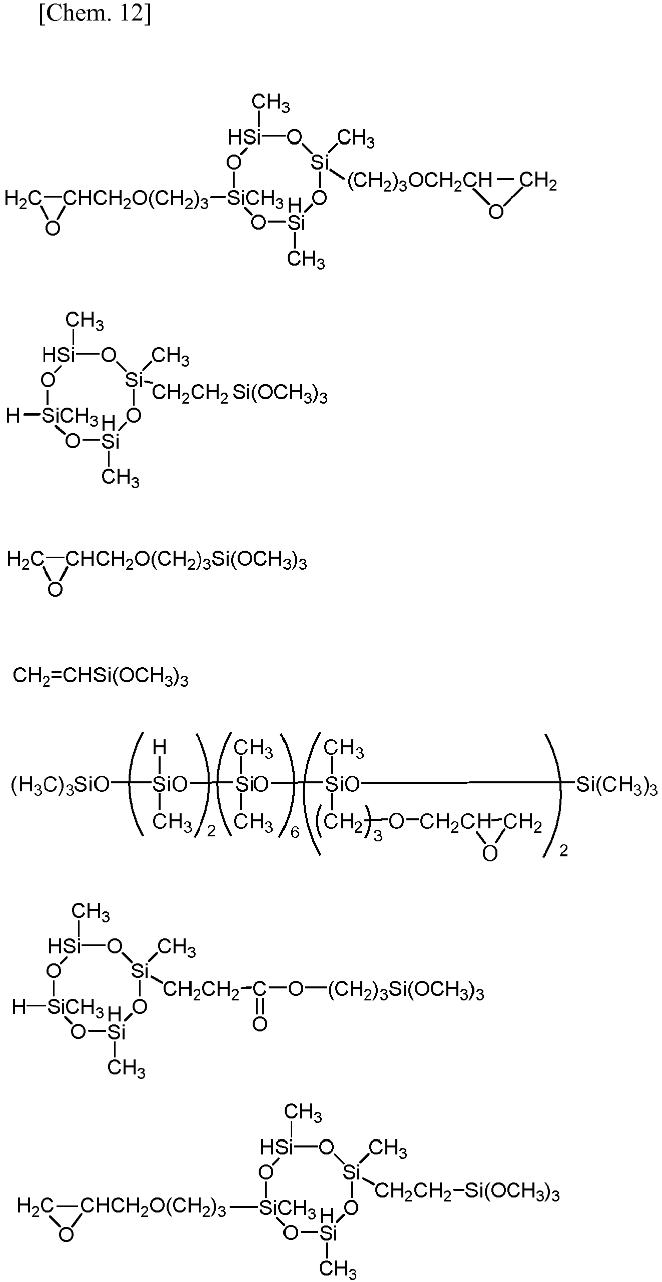 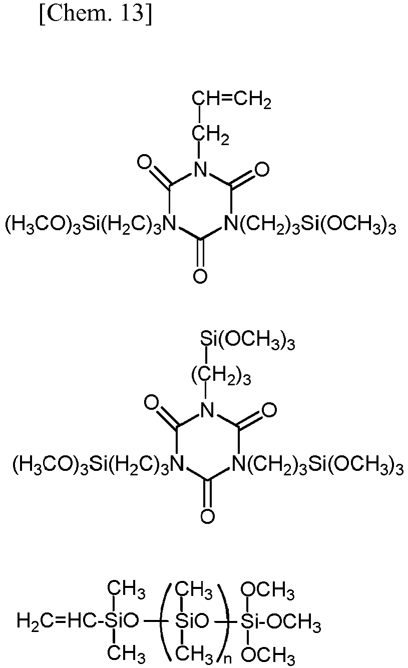 Herein n is an integer of 1 to 98.

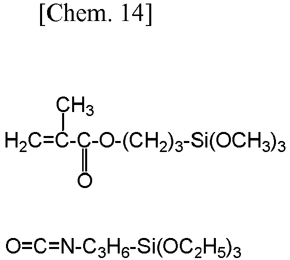

Component (F) is compounded in an amount of 0.05 to 5 parts by weight, preferably 0.1 to 2 parts by weight per 100 parts by weight of the organopolysiloxane as component (A). If the amount is too less, the composition may not be fully adhesive. Too much amounts add to the cost, rendering the composition uneconomical.

The tackifier as component (F) may be used alone or in admixture.

### (G) Condensation catalyst

Component (G) is a condensation catalyst, which is at least one compound selected from organotitanium compounds and organozirconium compounds and which functions as a condensation co-catalyst for component (F) for promoting adhesion. Component (G) may be used alone or in admixture. Exemplary of component (G) are titanium-based condensation co-catalysts including organic titanic acid esters such as titanium tetraisopropoxide, titanium tetra-n-butoxide and titanium tetra-2-ethylhexoxide, and organic titanium chelate compounds such as titanium diisopropoxy(acetylacetonate), titanium diisopropoxybis(ethylacetoacetate) and titanium tetraacetylacetonate; and zirconium-based condensation co-catalysts including organic zirconium esters such as zirconium tetra-n-propoxide and zirconium tetra-n-butoxide, and organic zirconium chelate compounds such as zirconium tributoxymonoacetylacetonate, zirconium monobutoxyacetylacetonate bis(ethylacetoacetate), and zirconium tetraacetylacetonate.

Component (G), organotitanium compound or organozirconium compound is an optional component which is blended if necessary. The amount of component (G) blended is typically up to about 5 parts by weight (0 to 5 parts by weight) per 100 parts by weight of component (A), and when used, 0.1 to 5 parts by weight and more preferably 0.2 to 2 parts by weight. If the amount is less than 0.1 part by weight, the cured composition may experience a loss of adhesion permanence under hot humid conditions. If the amount is more than 5 parts by weight, the cured composition is likely to lose heat resistance.

### Other components

Besides the foregoing components (A) to (G), the composition of the invention may further include other optional components as long as the object of the invention is not compromised. Examples of the other components are given below. Each of the other components may be used alone or in admixture.

### · Reaction inhibitor

The reaction inhibitor is not particularly limited as long as it is a compound having a cure reaction inhibiting effect on the addition reaction catalyst. Any of inhibitors which are well known in the art may be used. Examples of such inhibitor include phosphorus-containing compounds such as triphenylphosphine, nitrogen-containing compounds such as tributylamine, tetramethylethylenediamine and benzotriazole, sulfur-containing compounds, acetylene compounds such as acetylene alcohols, compounds having two or more alkenyl groups, hydroperoxy compounds, and malic acid derivatives. The extent of the cure-retarding effect achieved by the inhibitor varies according to the chemical structure of the inhibitor. It is thus preferable to adjust the amount of inhibitor included in the composition so as to be optimal for a particular inhibitor compound used. By blending an appropriate amount of the inhibitor, the composition is improved in long-term shelf stability at room temperature and curability.

### · Inorganic or organic filler

Besides the finely divided silica as component (D) such as precipitated silica, fumed silica and fired silica, the composition of the invention may have further added thereto inorganic or organic fillers as described below. Exemplary inorganic fillers include crystalline silica, hollow fillers, silsesquioxane, fumed titanium dioxide, magnesium oxide, zinc oxide, iron oxide, aluminum hydroxide, magnesium carbonate, calcium carbonate, zinc carbonate, laminar mica, carbon black, diatomaceous earth, and glass fibers; inorganic fillers which are treated with organosilicon compounds such as organoalkoxysilane compounds, organochlorosilane compounds, organosilazane compounds and low-molecular-weight siloxane compounds, to render the surface hydrophobic; silicone rubber powders; silicone resin powders, etc.

### · Other components

Besides, optional components may be further included, for example, organopolysiloxanes having on the molecule one silicon-bonded hydrogen atom and bearing no other functional groups (e.g., functional groups listed above for the organosilicon compounds), organopolysiloxanes having neither silicon-bonded hydrogen atoms nor silicon-bonded alkenyl groups, solvents such as water and organic solvents, creep hardening inhibitors, plasticizers, thixotropic agents, pigments, dyes and mildew-proofing agents.

### Preparation conditions

The preparation conditions, curing method and curing conditions of the inventive composition may be well-known preparation conditions, curing method and curing conditions. Typical curing conditions include 120 to 200°C and 1 to 10 minutes.

### <Airbag>

The composition of the invention is advantageously used in airbags, especially curtain airbags. Airbags, on which a silicone rubber coating layer is formed of a cured product of the composition, may be of well-known construction, for example, of hollow weave structure having a silicone rubber coating layer formed thereon. Exemplary of the airbag are airbags of hollow weave structure including a base fabric which is a woven fabric made of synthetic fibers such as nylon 66, nylon 6, polyester fibers, aramid fibers, various polyamide fibers and various polyester fibers.

In the preparation of such airbags, a conventional method may be used to coat the composition onto the base fabric. The thickness of a coating layer (or surface coating weight) is, for example, about 10 to 150 g/m², preferably about 15 to 80 g/m², and most preferably about 20 to 60 g/m² in dry state.

### EXAMPLES

Examples and Comparative Examples are given below for illustrating the invention, but the invention is by no means limited thereto. Notably, all parts are by weight. The viscosity is a value measured at 25°C by the method of JIS Z8803:2011.

### <Example 1>

On a kneader, 60 parts of molecular chain both end vinyldimethylsiloxy-capped dimethylpolysiloxane having a viscosity of about 30,000 mPa·s, 8 parts of hexamethyldisiloxane, 2 parts of water, and 40 parts of finely divided silica having a specific surface area of about 300 m²/g by the BET method (tradename: Aerosil 300, Nippon Aerosil Co., Ltd.) were mixed for 1 hour. Thereafter, the temperature in the kneader was elevated to 150°C, followed by 2 hours of mixing. Then the temperature was lowered to 100°C, after which 30 parts of molecular chain both end vinyldimethylsiloxy-capped dimethylpolysiloxane having a viscosity of about 30,000 mPa·s was added. The ingredients were mixed until uniform, obtaining Base Compound I.

Composition 1 was prepared by mixing 108 parts of Base Compound I with 62.4 parts of molecular chain both end vinyldimethylsiloxy-capped dimethylpolysiloxane having a viscosity of about 100,000 mPa·s, 0.2 part of cyclic organohydrogenpolysiloxane shown below as Compound 1 (silicon-bonded hydrogen atom content = 0.62 wt%), 11.5 parts of dimethylsiloxane/methylhydrogensiloxane copolymer capped at molecular chain both ends with dimethylhydrogensiloxy, containing silicon-bonded hydrogen atoms at both ends and non-end positions of the molecular chain, and having a viscosity of 90 mPa·s (silicon-bonded hydrogen atom content = 0.06 wt%), 0.10 part of dimethylsiloxane/methylhydrogensiloxane copolymer capped at molecular chain both ends with trimethylsiloxy, containing silicon-bonded hydrogen atoms on side chains of the molecular chain, and having a viscosity of 45 mPa·s (silicon-bonded hydrogen atom content = 1.08 wt%), 0.25 part of alkoxysilyl-modified isocyanurate compound shown below as Compound 2, 0.30 part of γ-glycidoxypropyltrimethoxysilane shown below as Compound 3, 0.15 part of 1-ethynylcyclohexanol, 0.20 part of a dimethylpolysiloxane solution of chloroplatinic acid/1,3-divinyltetramethyldisiloxane complex having a platinum atom content of 1 wt%, and 0.26 part of zirconium tetraacetylacetonate.

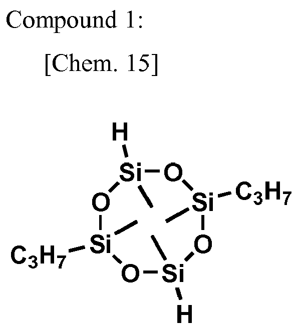

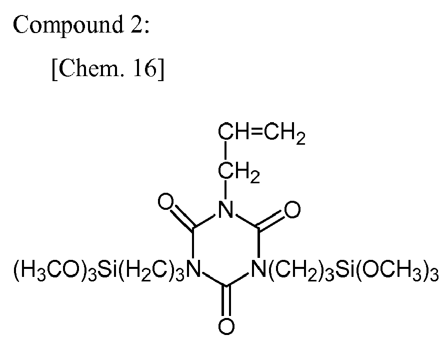

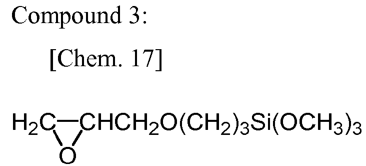

Notably, in Composition 1, the total number of silicon-bonded hydrogen atoms in components (B) and (C) was 1.5 per silicon-bonded alkenyl group in component (A), and the number of silicon-bonded hydrogen atoms in component (B) was 13% based on the total number of silicon-bonded hydrogen atoms in components (B) and (C).

The results including H/V and the molar ratio (in %) of silicon-bonded hydrogen atoms in component (B) are shown in Table 1. It is noted that H/V is a molar ratio of the total of silicon-bonded hydrogen atoms in components (B) and (C) to silicon-bonded alkenyl groups in component (A). The molar ratio (in %) of silicon-bonded hydrogen atoms in component (B) is a molar ratio (in %) of silicon-bonded hydrogen atoms in component (B) to the total of silicon-bonded hydrogen atoms in components (B) and (C).

Composition 1 was cured by heating at 150°C for 5 minutes. A test sheet was prepared therefrom according to JIS K6249:2003. The test sheet was measured for hardness, tensile strength and elongation at break.

Separately, Composition 1 was coated onto a hollow-weave airbag base fabric of nylon 66 (210 deniers) with a coater to a coating weight of 50 g/m² which was the minimum coating weight capable of uniform coating without variations, and heat cured in an oven at 200°C for 1 minute, yielding a hollow weave airbag. This airbag was subjected to an air tightness test. In the air tightness test, the airbag was inflated under a pressure of 100 kPa, and the residual pressure after 30 seconds was measured. Air tightness was evaluated in terms of the measured value.

### <Scott type crumpling test>

The composition was coated onto an airbag base fabric of nylon 66 (210 deniers) in a coating weight of 50 g/m² and heated at 200°C for 1 minute. On this coated fabric, a Scott type crumpling test was carried out.

The Scott type crumpling test was carried out according to the method of JIS K6404-6:1999, using a Scott type crumpling tester (Scott type crumple-flex abrasion tester, Toyo Seiki Co., Ltd.). The silicone rubber-coated nylon fabric was subjected to 500 cycles of the Scott type crumpling test under a loading pressure of 19.6 N, after which the coating was visually observed for breakage. The sample was rated "pass" when the silicone rubber coating layer did not peel from the coated surface, and "reject" when peeled.

### <Example 2>

Composition 2 was prepared by mixing 108 parts of Base Compound I in Example 1 with 62.4 parts of molecular chain both end vinyldimethylsiloxy-capped dimethylpolysiloxane having a viscosity of about 100,000 mPa·s, 0.24 part of cyclic organohydrogenpolysiloxane shown below as Compound 4 (silicon-bonded hydrogen atom content = 0.51 wt%), 11.5 parts of dimethylsiloxane/methylhydrogensiloxane copolymer capped at molecular chain both ends with dimethylhydrogensiloxy, containing silicon-bonded hydrogen atoms at both ends and non-end positions of the molecular chain, and having a viscosity of 90 mPa·s (silicon-bonded hydrogen atom content = 0.06 wt%), 0.10 part of dimethylsiloxane/methylhydrogensiloxane copolymer capped at molecular chain both ends with trimethylsiloxy, containing silicon-bonded hydrogen atoms at side chains of the molecular chain, and having a viscosity of 45 mPa·s (silicon-bonded hydrogen atom content = 1.08 wt%), 0.25 part of alkoxy-modified isocyanurate compound shown below as Compound 5, 0.30 part of γ-glycidoxypropyltrimethoxysilane shown below as Compound 3, 0.15 part of 1-ethynylcyclohexanol, 0.20 part of a dimethylpolysiloxane solution of chloroplatinic acid/1,3-divinyltetramethyldisiloxane complex having a platinum atom content of 1 wt%, and 0.26 part of zirconium tetraacetylacetonate.

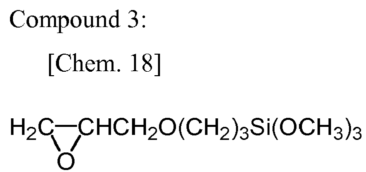

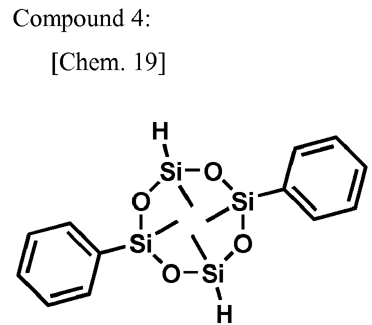

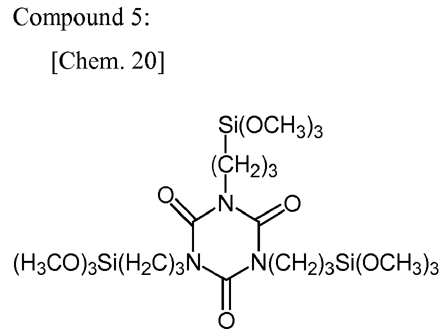

Notably, in Composition 1, the total number of silicon-bonded hydrogen atoms in components (B) and (C) was 1.5 per silicon-bonded alkenyl group in component (A), and the number of silicon-bonded hydrogen atoms in component (B) was 13% based on the total number of silicon-bonded hydrogen atoms in components (B) and (C).

As in Example 1, a test sheet, a hollow weave airbag, and a coated base fabric were prepared and tested. The results are also shown in Table 1.

### <Comparative Example 1>

Composition 3 was prepared by mixing 108 parts of Base Compound I in Example 1 with 62.4 parts of molecular chain both end vinyldimethylsiloxy-capped dimethylpolysiloxane having a viscosity of about 100,000 mPa·s, 0.94 part of dimethylpolysiloxane containing one silicon-bonded hydrogen atom in the form of a dimethylhydrogensiloxy group at each end of the molecular chain and having a viscosity of 18 mPa·s (silicon-bonded hydrogen atom content = 0.13 wt%), 11.5 parts of dimethylsiloxane/methylhydrogensiloxane copolymer capped at molecular chain both ends with dimethylhydrogensiloxy, containing silicon-bonded hydrogen atoms at both ends and non-end positions of the molecular chain, and having a viscosity of 90 mPa·s (silicon-bonded hydrogen atom content = 0.06 wt%), 0.10 part of dimethylsiloxane/methylhydrogensiloxane copolymer capped at molecular chain both ends with trimethylsiloxy, containing silicon-bonded hydrogen atoms on side chains of the molecular chain, and having a viscosity of 45 mPa·s (silicon-bonded hydrogen atom content = 1.08 wt%), 0.25 part of alkoxysilyl-modified isocyanurate compound shown below as Compound 2, 0.30 part of γ-glycidoxypropyltrimethoxysilane shown below as Compound 3, 0.15 part of 1-ethynylcyclohexanol, 0.20 part of a dimethylpolysiloxane solution of chloroplatinic acid/1,3-divinyltetramethyldisiloxane complex having a platinum atom content of 1 wt%, and 0.26 part of zirconium tetraacetylacetonate.

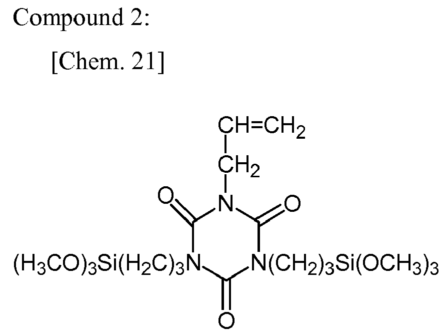

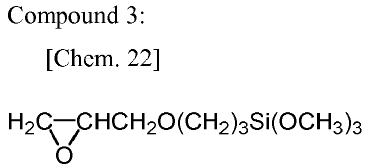

Notably, in Composition 1, the total number of silicon-bonded hydrogen atoms in components (B) and (C) was 1.5 per silicon-bonded alkenyl group in component (A), and the number of silicon-bonded hydrogen atoms in component (B) was 0% based on the total number of silicon-bonded hydrogen atoms in components (B) and (C).

As in Example 1, a test sheet, a hollow weave airbag, and a coated base fabric were prepared and tested. The results are also shown in Table 1.

### <Comparative Example 2>

Composition 4 was prepared by mixing 108 parts of Base Compound I in Example 1 with 62.4 parts of molecular chain both end vinyldimethylsiloxy-capped dimethylpolysiloxane having a viscosity of about 100,000 mPa·s, 13.5 parts of dimethylsiloxane/methylhydrogensiloxane copolymer capped with dimethylhydrogensiloxy at both ends of the molecular chain, containing silicon-bonded hydrogen atoms at both ends and non-end positions of the molecular chain and having a viscosity of 90 mPa·s (silicon-bonded hydrogen atom content = 0.06 wt%), 0.10 part of dimethylsiloxane/methylhydrogensiloxane copolymer capped at molecular chain both ends with trimethylsiloxy, containing silicon-bonded hydrogen atoms on side chains of the molecular chain, and having a viscosity of 45 mPa·s (silicon-bonded hydrogen atom content = 1.08 wt%), 0.25 part of alkoxysilyl-modified isocyanurate compound shown below as Compound 2, 0.30 part of y-glycidoxypropyltrimethoxysilane shown below as Compound 3, 0.15 part of 1-ethynylcyclohexanol, 0.20 part of a dimethylpolysiloxane solution of chloroplatinic acid/1,3-divinyltetramethyldisiloxane complex having a platinum atom content of 1 wt%, and 0.26 part of zirconium tetraacetylacetonate.

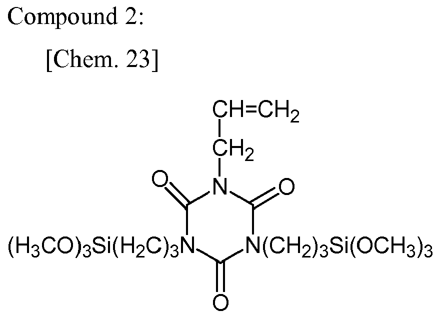

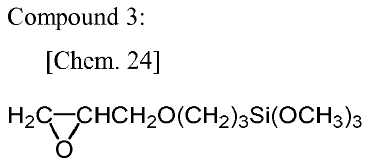

Notably, in Composition 1, the total number of silicon-bonded hydrogen atoms in components (B) and (C) was 1.5 per silicon-bonded alkenyl group in component (A), and the number of silicon-bonded hydrogen atoms in component (B) was 0% based on the total number of silicon-bonded hydrogen atoms in components (B) and (C).

As in Example 1, a test sheet, a hollow weave airbag, and a coated base fabric were prepared and tested. The results are also shown in Table 1.

**[Table 1]**

| | Example 1 | Example 2 | Comparative Example 1 | Comparative Example 2 |
|---|---|---|---|---|
| Hardness (Durometer Type A) | 7 | 6 | 7 | 10 |
| Tensile strength (MPa) | 4.0 | 3.5 | 3.0 | 4.8 |
| Elongation at break (%) | 1,500 | 1,490 | 1,420 | 1,300 |
| H/V | 1.5 | 1.5 | 1.5 | 1.5 |
| Ratio of hydrogen atom in (B) | 13 | 13 | 0 | 0 |
| Air tightness (kPa) | 80 | 75 | 30 | 10 |
| Scott type crumpling test | Pass | Pass | Reject | Reject |

## Claims

1. An addition-curable silicone rubber composition comprising:
(A) 100 parts by weight of an organopolysiloxane having at least two C₂-C₈ alkenyl groups per molecule,
(B) a cyclic organohydrogenpolysiloxane having the formula (1): 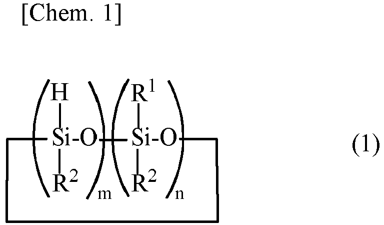 wherein R¹ is a C₁-C₁₂ alkyl group, R² is a C₁-C₁₂ alkyl group or C₆-C₁₂ aryl group, m is an integer of 1 to 3, n is an integer of 1 to 3, m+n is 4 or 5, the organohydrogenpolysiloxane of formula (1) wherein m=2 being present in an amount of at least 50 mol% based on the total amount of component (B),
(C) an organohydrogenpolysiloxane having at least two silicon-bonded hydrogen atoms per molecule, represented by the average compositional formula (2):
[Chem. 2]
R²ₑH_{f}SiO_{(4-e-f)/2} (2)
wherein R² is as defined above, e is a number of 0.7 to 2.1, f is a number of 0.001 to 1.0, e+f is a number of 0.8 to 2.7,
the amounts of components (B) and (C) blended being such that the total number of silicon-bonded hydrogen atoms in components (B) and (C) is 1 to 7 per silicon-bonded alkenyl group in component (A), and the number of silicon-bonded hydrogen atoms in component (B) is 1 to 30% based on the total number of silicon-bonded hydrogen atoms in components (B) and (C),
(D) 0.1 to 50 parts by weight of finely divided silica having a specific surface area of at least 50 m²/g as measured by the BET method,
(E) a catalytic amount of an addition reaction catalyst,
(F) a tackifier, and
(G) at least one condensation catalyst selected from organotitanium compounds and organozirconium compounds.

2. The addition-curable silicone rubber composition of claim 1 wherein component (F) contains an alkoxysilyl-modified isocyanurate compound having the formula (3): 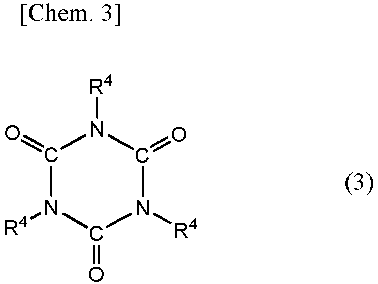 wherein R⁴ is an allyl group or a group having the formula (4): 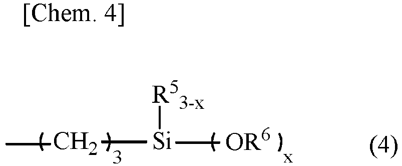 wherein R⁵ is a C₁-C₆ monovalent hydrocarbon group, R⁶ is a C₁-C₄ alkyl group, x is 2 or 3, at least two of R⁴ being groups of formula (4).

3. The addition-curable silicone rubber composition of claim 1 or 2 wherein component (A) contains (A-1) an alkenyl-containing organopolysiloxane containing at least two C₂-C₈ alkenyl groups per molecule and having a viscosity of at least 70,000 mPa·s at 25°C as measured by the method of JIS Z8803:2011.

4. The addition-curable silicone rubber composition of claim 3 wherein component (A) further contains (A-2) an alkenyl-containing organopolysiloxane containing at least two C₂-C₈ alkenyl groups per molecule and having a viscosity of 10,000 to 50,000 mPa s at 25°C as measured by the method of JIS Z8803:2011.

5. The addition-curable silicone rubber composition of any one of claims 1 to 4 wherein component (B) is a cyclic organohydrogenpolysiloxane of formula (1) wherein m=n=2.

6. The addition-curable silicone rubber composition of any one of claims 1 to 5 wherein component (C) contains (C-1) an organohydrogenpolysiloxane having at least one silicon-bonded hydrogen atom (SiH group) at each of molecular chain end and side chain.

7. The addition-curable silicone rubber composition of claim 7 wherein component (C) further contains at least one of
(C-2) an organohydrogenpolysiloxane having a silicon-bonded hydrogen atom (SiH group) only at a side chain of the molecular chain and
(C-3) an organohydrogenpolysiloxane having a silicon-bonded hydrogen atom (SiH group) only at an end of the molecular chain.

8. An airbag comprising a base fabric and a cured film of the addition-curable silicone rubber composition of any one of claims 1 to 7 thereon.

9. The airbag of claim 8 having a hollow weave structure.

10. The airbag of claim 8 or 9 for use as a curtain airbag.

## Patentansprüche

1. Additionshärtbare Silikonkautschukzusammensetzung, umfassend:
(A) 100 Gewichtsteile eines Organopolysiloxans mit mindestens zwei C₂-C₈-Alkenylgruppen pro Molekül,
(B) ein cyclisches Organohydrogenpolysiloxan mit der Formel (1): 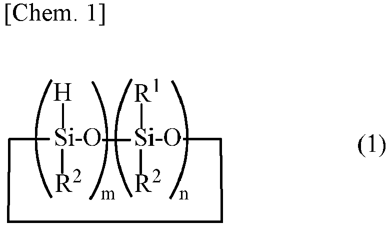 worin R¹ eine C₁-C₁₂-Alkylgruppe ist, R² eine C₁-C₁₂-Alkylgruppe oder C₆-C₁₂-Arylgruppe ist, m eine ganze Zahl von 1 bis 3 ist, n eine ganze Zahl von 1 bis 3 ist, m+n 4 oder 5 ist, wobei das Organohydrogenpolysiloxan der Formel (1), worin m=2 ist, in einer Menge von mindestens 50 Mol-%, bezogen auf die Gesamtmenge der Komponente (B), vorliegt,
(C) ein Organohydrogenpolysiloxan mit mindestens zwei siliciumgebundenen Wasserstoffatomen pro Molekül, dargestellt durch die durchschnittliche Zusammensetzungsformel (2):
[Chem. 2]
R²ₑH_{f}SiO_{(4-e-f)/2} (2)
worin R² wie oben definiert ist, e eine Zahl von 0,7 bis 2,1 ist, f eine Zahl von 0,001 bis 1,0 ist, e+f eine Zahl von 0,8 bis 2,7 ist,
wobei die zugemischten Mengen der Komponenten (B) und (C) so sind, dass die Gesamtzahl der siliciumgebundenen Wasserstoffatome in den Komponenten (B) und (C) 1 bis 7 pro siliciumgebundener Alkenylgruppe in der Komponente (A) beträgt und die Anzahl der siliciumgebundenen Wasserstoffatome in der Komponente (B) 1 bis 30%, bezogen auf die Gesamtzahl der siliciumgebundenen Wasserstoffatome in den Komponenten (B) und (C), beträgt,
(D) 0,1 bis 50 Gewichtsteile fein verteiltes Siliciumdioxid mit einer spezifischen Oberfläche von mindestens 50 m²/g, gemessen nach dem BET-Verfahren,
(E) eine katalytische Menge eines Additionsreaktionskatalysators,
(F) einen Klebrigmacher, und
(G) mindestens einen Kondensationskatalysator, ausgewählt aus Organotitanverbindungen und Organozirkoniumverbindungen.

2. Additionshärtbare Silikonkautschukzusammensetzung nach Anspruch 1, wobei die Komponente (F) eine alkoxysilylmodifizierte Isocyanuratverbindung mit der Formel (3) enthält: 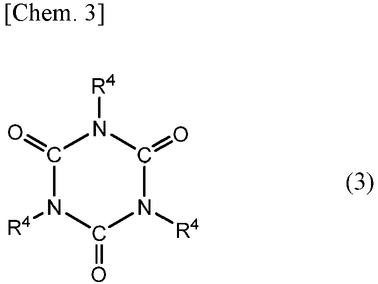 worin R⁴ eine Allylgruppe oder eine Gruppe mit der Formel (4) ist: 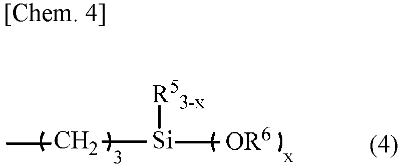 worin R⁵ eine einwertige C₁-C₆-Kohlenwasserstoffgruppe ist, R⁶ eine C₁-C₄-Alkylgruppe ist, x 2 oder 3 ist, wobei mindestens zwei von R⁴ Gruppen der Formel (4) sind.

3. Additionshärtbare Silikonkautschukzusammensetzung nach Anspruch 1 oder 2, wobei die Komponente (A) ein alkenylhaltiges Organopolysiloxan (A-1) enthält, das mindestens zwei C₂-C₈-Alkenylgruppen pro Molekül enthält und eine Viskosität von mindestens 70.000 mPa·s bei 25°C aufweist, gemessen nach dem Verfahren von JIS Z8803:2011.

4. Additionshärtbare Silikonkautschukzusammensetzung nach Anspruch 3, wobei die Komponente (A) weiterhin ein alkenylhaltiges Organopolysiloxan (A-2) enthält, das mindestens zwei C₂-C₈-Alkenylgruppen pro Molekül enthält und eine Viskosität von 10.000 bis 50.000 mPa·s bei 25°C aufweist, gemessen nach dem Verfahren von JIS Z8803:2011.

5. Additionshärtbare Silikonkautschukzusammensetzung nach einem der Ansprüche 1 bis 4, wobei die Komponente (B) ein cyclisches Organohydrogenpolysiloxan der Formel (1) ist, worin m=n=2.

6. Additionshärtbare Silikonkautschukzusammensetzung nach einem der Ansprüche 1 bis 5, wobei die Komponente (C) ein Organohydrogenpolysiloxan (C-1) mit mindestens einem siliciumgebundenen Wasserstoffatom (SiH-Gruppe) an jedem Ende der Molekülkette und der Seitenkette enthält.

7. Additionshärtbare Silikonkautschukzusammensetzung nach Anspruch 7, wobei die Komponente (C) weiterhin mindestens eines enthält aus
(C-2) einem Organohydrogenpolysiloxan mit einem siliciumgebundenen Wasserstoffatom (SiH-Gruppe) nur an einer Seitenkette der Molekülkette und
(C-3) einem Organohydrogenpolysiloxan mit einem siliciumgebundenen Wasserstoffatom (SiH-Gruppe) nur an einem Ende der Molekülkette.

8. Airbag, umfassend ein Grundgewebe und einen darauf befindlichen gehärteten Film aus der additionshärtbaren Silikonkautschukzusammensetzung nach einem der Ansprüche 1 bis 7.

9. Airbag nach Anspruch 8 mit einer Hohlgewebestruktur.

10. Airbag nach Anspruch 8 oder 9 zur Verwendung als Vorhangairbag.

## Revendications

1. Composition de caoutchouc silicone durcissable par addition, comportant :
(A) 100 parties en poids d'un organopolysiloxane ayant au moins deux groupes alcényle en C₂ à C₈ par molécule,
(B) un organohydrogénopolysiloxane cyclique ayant la formule (1) : 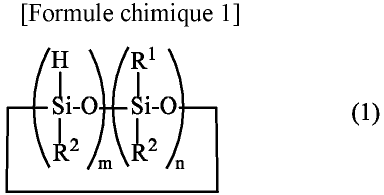 dans laquelle R¹ est un groupe alkyle en C₁ à C₁₂, R² est un groupe alkyle en C₁ à C₁₂ ou un groupe aryle en C₆ à C₁₂, m est un entier de 1 à 3, n est un entier de 1 à 3, m+n vaut 4 ou 5, l'organohydrogénopolysiloxane de formule (1) dans lequel m = 2 étant présent en une quantité d'au moins 50 % en moles basée sur la quantité totale du composant (B),
(C) un organohydrogénopolysiloxane ayant au moins deux atomes d'hydrogène liés au silicium par molécule, représenté par la formule de composition moyenne (2) :
[Formule chimique 2]
R²ₑH_{f}SiO_{(4-e-f)/2} (2)
dans laquelle R² est tel que défini ci-dessus, e est un nombre de 0,7 à 2,1, f est un nombre de 0,001 à 1,0, e+f est un nombre de 0,8 à 2,7,
les quantités des composants (B) et (C) mélangés étant telles que le nombre total d'atomes d'hydrogène liés au silicium dans les composants (B) et (C) est de 1 à 7 par groupe alcényle lié au silicium dans le composant (A), et le nombre d'atomes d'hydrogène liés au silicium dans le composant (B) est de 1 à 30 % sur la base du nombre total d'atomes d'hydrogène liés au silicium dans les composants (B) et (C),
(D) 0,1 à 50 parties en poids de silice finement divisée ayant une surface spécifique d'au moins 50 m²/g lorsqu'elle est mesurée par la méthode BET,
(E) une quantité catalytique d'un catalyseur de réaction d'addition,
(F) un agent donnant du collant, et
(G) au moins un catalyseur de condensation choisi parmi des composés organotitane et des composés organozirconium.

2. Composition de caoutchouc silicone durcissable par addition selon la revendication 1, dans laquelle le composant (F) contient un composé isocyanurate modifié par un alcoxysilyle ayant la formule (3) : 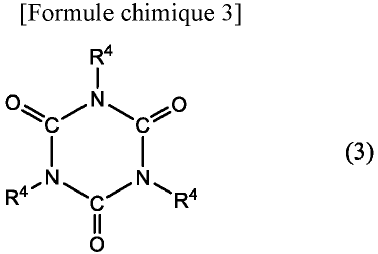 dans laquelle R⁴ est un groupe allyle ou un groupe ayant la formule (4) : 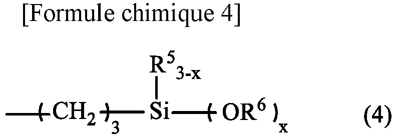 dans laquelle R⁵ est un groupe hydrocarbure monovalent en C₁ à C₆, R⁶ est un groupe alkyle en C₁ à C₄, x vaut 2 ou 3, au moins deux R⁴ étant des groupes de formule (4).

3. Composition de caoutchouc silicone durcissable par addition selon la revendication 1 ou 2, dans laquelle le composant (A) contient (A-1) un organopolysiloxane contenant un alcényle contenant au moins deux groupes alcényle en C₂ à C₈ par molécule et ayant une viscosité d'au moins 70 000 mPa·s à 25 °C lorsqu'elle est mesurée par la méthode de la norme JIS Z8803:2011.

4. Composition de caoutchouc silicone durcissable par addition selon la revendication 3, dans laquelle le composant (A) contient en outre (A-2) un organopolysiloxane contenant un alcényle contenant au moins deux groupes alcényle en C₂ à C₈ par molécule et ayant une viscosité de 10 000 à 50 000 mPa·s à 25 °C lorsqu'elle est mesurée par la méthode de la norme JIS Z8803:2011.

5. Composition de caoutchouc silicone durcissable par addition selon l'une quelconque des revendications 1 à 4, dans laquelle le composé (B) est un organohydrogénopolysiloxane cyclique de formule (1), dans laquelle m = n = 2.

6. Composition de caoutchouc silicone durcissable par addition selon l'une quelconque des revendications 1 à 5, dans laquelle le composant (C) contient (C-1) un organohydrogénopolysiloxane ayant au moins un atome d'hydrogène lié au silicium (groupe SiH) sur chaque chaîne parmi une extrémité de chaîne moléculaire et une chaîne latérale.

7. Composition de caoutchouc silicone durcissable par addition selon la revendication 7, dans laquelle le composant (C) contient en outre au moins un élément parmi
(C-2) un organohydrogénopolysiloxane ayant un atome d'hydrogène lié au silicium (groupe SiH) uniquement sur une chaîne latérale de la chaîne moléculaire et
(C-3) un organohydrogénopolysiloxane ayant un atome d'hydrogène lié au silicium (groupe SiH) uniquement à une extrémité de la chaîne moléculaire.

8. Coussin gonflable comportant une toile de base et un film durci de la composition de caoutchouc silicone durcissable par addition selon l'une quelconque des revendications 1 à 7 sur celui-ci.

9. Coussin gonflable selon la revendication 8 ayant une structure d'armure creuse.

10. Coussin gonflable selon la revendication 8 ou 9 pour une utilisation en tant que rideau gonflable.
